# EUROPEAN PATENT SPECIFICATION

(11) **EP 4 322 279 B1**
(45) Date of publication and mention of the grant of the patent: **22.10.2025**
(21) Application number: 23737493.9
(22) Date of filing: 10.01.2023
(51) Int. Cl.: H01M 10/0569, H01M 10/0568, H01M 10/0567, H01M 10/052, H01G 11/60, H01G 11/62, H01G 11/64, H01M 4/38, H01M 4/58

(54) **NONAQUEOUS ELECTROLYTE AND ELECTROCHEMICAL DEVICE INCLUDING THE SAME**
NICHTWÄSSRIGER ELEKTROLYT UND ELEKTROCHEMISCHE VORRICHTUNG MIT DIESEM ELEKTROLYTEN
ELECTROLYTE NON AQUEUX ET DISPOSITIF ÉLECTROCHIMIQUE LE CONTENANT

(30) Priority: 10.01.2022 KR 20220003568
(43) Date of publication of application: 14.02.2024
(73) Proprietor: LG Energy Solution, Ltd., Seoul 07335 (KR)
(72) Inventor: JANG, Eun-Ji, Daejeon 34122 (KR); LEE, Chang-Hoon, Daejeon 34122 (KR)
(74) Representative: Goddar, Heinz J.
(86) International application number: PCT/KR2023/000461
(87) International publication number: WO 2023/132745

(56) References cited:
- WO-A1-2018/173476
- WO-A2-2005/096411
- JP-A- 2015 191 737
- JP-A- 2021 050 136
- KR-A- 20200 105 482
- KR-A- 20210 127 329
- US-A1- 2020 014 066

## Description

### TECHNICAL FIELD

The present disclosure relates to a nonaqueous electrolyte and an electrochemical device including the same.

The present application claims priority to Korean Patent Application No. 10-2022-0003568 filed on January 10, 2022 in the Republic of Korea.

### BACKGROUND ART

As energy storage technology has been given an increasing attention, the spectrum of application thereof has been expanded to cellular phones, tablet and laptop computers and camcorders, and even to energy for electric vehicles (EVs) and hybrid electric vehicles (HEVs), and research and development of electrochemical devices have been increased gradually. In this context, electrochemical devices have been most spotlighted, and particularly, development of secondary batteries, such as rechargeable lithium-sulfur batteries, has been focused. Recently, research and development of designing novel electrodes and batteries have been conducted in order to improve the capacity density and specific energy in developing such batteries. Secondary batteries comprising a nonaqueous electrolyte are known from US 2020/014066 A1, for instance.

Such an electrochemical device, particularly, a lithium metal secondary battery, such as a lithium-sulfur battery (Li-S battery), uses light lithium metal as a negative electrode active material and has a significantly high energy density (theoretical capacity: 3,862 mAh/g), and thus has been spotlighted as a next-generation high-capacity battery. In the lithium-sulfur battery, reduction of sulfur and oxidation of lithium metal occur during discharge. Herein, sulfur forms lithium polysulfide (LiPS) having a linear structure from S₈ having a cyclic structure, and the lithium-sulfur battery is characterized in that it shows a phased discharge voltage until the polysulfide is reduced completely into Li₂S.

However, the lithium-sulfur battery undergoes a decrease in charge/discharge efficiency during charge/discharge cycles due to the side reactions (deposition of byproducts caused by the decomposition of an electrolyte), or the like, resulting in degradation of the life of the battery.

Particularly, lithium metal used as a negative electrode active material easily forms large-area dendrite and reacts with a salt and additive in an electrolyte to form a solid electrolyte interphase (SEI) to cause continuous consumption of the salt and additive in the electrolyte, resulting in acceleration of the deterioration of the battery.

Such decomposition of the electrolyte becomes severe and is accelerated at high temperature. Under these circumstances, there is a need for developing a composition of electrolyte which can provide increased electrolyte stability in order to allow operation of a battery under a high-temperature environment.

### DISCLOSURE

### Technical Problem

The present disclosure is designed to solve the problems of the related art, and therefore the present disclosure is directed to providing a nonaqueous electrolyte having improved stability and an electrochemical device including the same.

The present disclosure is also directed to providing a nonaqueous electrolyte having improved life characteristics at high temperature and an electrochemical device including the same.

### Technical Solution

In one aspect of the present disclosure, there is provided a nonaqueous electrolyte according to any one of the following embodiments.

According to the first embodiment of the present disclosure, there is provided a nonaqueous electrolyte, including:
a first solvent including a heterocyclic compound having at least one double bond or not, and containing at least one of oxygen and sulfur atoms;
a second solvent including at least one of an ether-based compound, an ester-based compound, an amide-based compound and a carbonate-based compound; and
a first lithium salt,
wherein the first lithium salt includes lithium bis(nonafluorobutanesulfonyl)imide, and the lithium bis(nonafluorobutanesulfonyl)imide is present in an amount of 2-5 wt% based on 100 wt% of the total weight of the nonaqueous electrolyte.

According to the second embodiment of the present disclosure, there is provided the nonaqueous electrolyte as defined in the first embodiment, which further includes a second lithium salt, and the second lithium salt includes LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₂NLi, (CF₃SO₂)₃CLi, lithium chloroborate, lithium C4 or lower aliphatic carboxylate, lithium tetraphenylborate, lithium imide, or two or more of them.

According to the third embodiment of the present disclosure, there is provided the nonaqueous electrolyte as defined in the second embodiment, wherein the second lithium salt includes (SO₂F)₂NLi.

According to the fourth embodiment of the present disclosure, there is provided the nonaqueous electrolyte as defined in the second embodiment, wherein the second lithium salt has a concentration of 0.2-2.0 M.

According to the fifth embodiment of the present disclosure, there is provided the nonaqueous electrolyte as defined in any one of the first to the fourth embodiments, wherein the heterocyclic compound is a 3- to 15-membered heterocyclic compound non-substituted or substituted with at least one selected from the group consisting of a C1-C4 alkyl group, a C3-C8 cyclic alkyl group, a C6-C10 aryl group, a halogen group, a nitro group, an amine group and a sulfonyl group, or a polycyclic compound of at least one of a C3-C8 cyclic alkyl group and a C6-C10 aryl group with a heterocyclic compound.

According to the sixth embodiment, there is provided the nonaqueous electrolyte as defined in any one of the first to the fifth embodiments, wherein the heterocyclic compound includes 1,3-dioxolane, 4,5-diethyl-1,3-dioxolane, 4,5-dimethyl-1,3-dioxolane, 4-methyl-1,3-dioxolane, 4-ethyl-1,3-dioxolane, 1,3-dioxane, 1,4-dioxane, 4-methyl-1,3-dioxane and 2-methyl-1,3-dioxane, furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, or two or more of them.

According to the seventh embodiment, there is provided the nonaqueous electrolyte as defined in any one of the first to the sixth embodiments, wherein the ether-based compound of the second solvent includes dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, or two or more of them.

According to the eighth embodiment, there is provided the nonaqueous electrolyte as defined in any one of the first to the seventh embodiments, which further includes lithium nitrate.

According to the ninth embodiment, there is provided the nonaqueous electrolyte as defined in any one of the first to the eighth embodiments, which further includes lanthanum nitrate, potassium nitrate, cesium nitrate, magnesium nitrate, barium nitrate, lithium nitrite, potassium nitrite, cesium nitrite, or two or more of them.

According to the tenth embodiment, there is provided the nonaqueous electrolyte as defined in any one of the first to the ninth embodiments, which includes 2-methylfuran as the first solvent, dimethoxyethane as the second solvent, lithium bis(fluorosulfonyl)imide ((SO₂F)₂NLi, LiFSI), lithium nitrate and lithium bis(nonafluorobutanesulfonyl)imide (LiNFSI).

In another aspect of the present disclosure, there is provided an electrochemical device as defined in any one of the following embodiments.

According to the eleventh embodiment of the present disclosure, there is provided an electrochemical device including: a positive electrode; a negative electrode; a separator interposed between the positive electrode and the negative electrode; and the nonaqueous electrolyte as defined in any one of the first to the tenth embodiments.

According to the twelfth embodiment of the present disclosure, there is provided the electrochemical device as defined in the eleventh embodiment, which is a lithium-sulfur battery.

### Advantageous Effects

The nonaqueous electrolyte according to an embodiment of the present disclosure includes lithium bis(nonafluorobutanesulfonyl)imide in an amount of 2-5 wt% based on 100 wt% of the total weight of the nonaqueous electrolyte, and thus is inhibited from decomposition and provides improved stability.

The nonaqueous electrolyte according to an embodiment of the present disclosure includes lithium bis(nonafluorobutanesulfonyl)imide in an amount of 2-5 wt% based on 100 wt% of the total weight of the nonaqueous electrolyte, and thus provides improved life characteristics particularly at high temperature.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

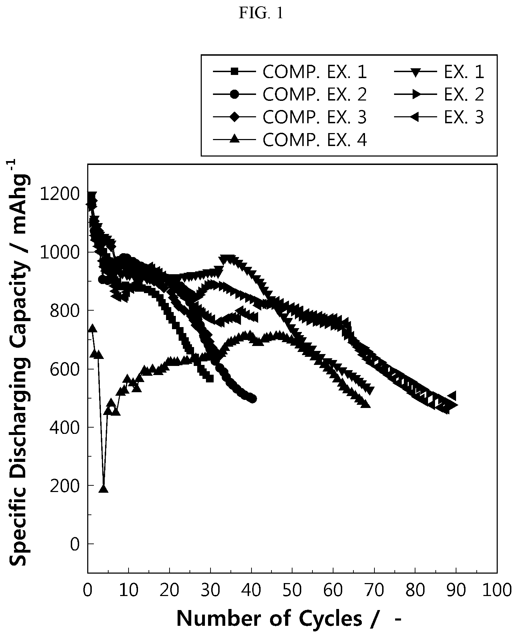

FIG. 1 is a graph illustrating the cycle number corresponding to a capacity retention of 80% in the electrochemical device according to each of Examples 1-3 and Comparative Examples 1-4.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a nonaqueous electrolyte, including: a first solvent including a heterocyclic compound having at least one double bond or not, and containing at least one of oxygen and sulfur atoms; a second solvent including at least one of an ether-based compound, an ester-based compound, an amide-based compound and a carbonate-based compound; and a first lithium salt, wherein the first lithium salt includes lithium bis(nonafluorobutanesulfonyl)imide, and the lithium bis(nonafluorobutane sulfonyl)imide is present in an amount of 2-5 wt% based on 100 wt% of the total weight of the nonaqueous electrolyte.

Hereinafter, each of the first solvent, the second solvent and lithium bis(nonafluorobutanesulfonyl)imide as the first lithium salt will be explained in detail.

### First Solvent

The first solvent includes a heterocyclic compound having at least one double bond or not, and containing at least one of oxygen and sulfur atoms, and has a difficulty in dissolving salt due to the delocalization of lone pair electrons of its heteroatom (oxygen or sulfur atom) in nature. Therefore, the first solvent can inhibit the formation of lithium dendrite by forming a polymer protective layer (solid electrolyte interphase (SEI) layer) on the surface of lithium metal through the ring opening polymerization reaction of the heterocyclic compound, and can improve the life characteristics of an electrochemical device by reducing the decomposition of the electrolyte on the lithium metal surface and side reactions caused thereby. Particularly, when the negative electrode is a lithium-based negative electrode, it is possible to inhibit formation of lithium dendrite by forming a polymer protective layer (solid electrolyte interphase (SEI)) layer on the surface of lithium-based metal. Further, it is possible to improve the life characteristics of an electrochemical device by reducing the electrolyte decomposition on the surface of lithium-based metal and side reactions caused thereby.

In other words, the heterocyclic compound according to the present disclosure may include at least one double bond in order to form a solid electrolyte interphase layer on the surface of the negative electrode, and essentially includes at least one heteroatom (oxygen or sulfur atom) in order to impart polarity and to realize an effect of increasing the affinity with another solvent in the electrolyte, or the like.

The heterocyclic compound may be a 3- to 15-membered, 3- to 7-membered, or 5-to 6-membered heterocyclic compound. In addition, the heterocyclic compound may be a heterocyclic compound non-substituted or substituted with at least one selected from the group consisting of a C1-C4 alkyl group, a C3-C8 cyclic alkyl group, a C6-C10 aryl group, a halogen group, a nitro group (-NO₂), an amine group (-NH₂) and a sulfonyl group (-SO₂). In addition, the heterocyclic compound may be a polycyclic compound of at least one of a C3-C8 cyclic alkyl group and a C6-C10 aryl group with a heterocyclic compound.

When the heterocyclic compound is substituted with a C1-C4 alkyl group, radicals may be stabilized to inhibit the side reactions with the electrolyte. In addition, when the heterocyclic compound is substituted with a halogen or nitro group, it is possible to form a functional protective layer on the lithium metal surface, and the functional protective layer may function as a compact type protective layer. Particularly, when the negative electrode is a lithium-based metal, it is possible to form a functional protective layer on the surface of lithium-based metal. In addition, when the electrochemical device is a lithium-sulfur battery, it is possible to inhibit the side reactions between polysulfide and lithium-based metal.

Particular examples of the heterocyclic compound include 1,3-dioxolane, 4,5-diethyl-1,3-dioxolane, 4,5-dimethyl-1,3-dioxolane, 4-methyl-1,3-dioxolane, 4-ethyl-1,3-dioxolane, 1,3-dioxane, 1,4-dioxane, 4-methyl-1,3-dioxane and 2-methyl-1,3-dioxane, furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, or the like. Particularly, when the positive electrode active material is sulfur, use of 2-methylfuran having low solubility to polysulfide, as the first solvent, is advantageous in that it can reduce dissolution of polysulfide in the nonaqueous electrolyte to inhibit an increase in the resistance of the nonaqueous electrolyte. In addition, even when the nonaqueous electrolyte includes lithium bis(nonafluorobutanesulfonyl)imide having a high molecular weight, use of 2-methylfuran as the first solvent easily makes up an increase in the resistance. In addition, when the negative electrode is a lithium-based metal, 2-methylfuran can form a protective layer on the surface of lithium-based metal through the ring opening polymerization.

The first solvent including such a heterocyclic compound may be present in an amount of 5-50 parts by volume or 10-30 parts by volume (the balance corresponds to the second solvent), based on 100 parts by volume of the total organic solvent (i.e. the first solvent + the second solvent) contained in the nonaqueous electrolyte according to the present disclosure. When the content of the first solvent satisfies the above-defined range, it is possible to prevent the problem of incomplete formation of a protective layer on the negative electrode surface and to easily prevent the problem of degradation of the capacity and life of the battery, caused by an increase in the resistance of the electrolyte and negative electrode surface.

Particularly, when the positive electrode active material is sulfur, it is possible to easily prevent the problem of a difficulty in inhibiting an increase in the resistance of the electrolyte, caused by degradation of the ability of reducing the elution of polysulfide. When the negative electrode active material is a lithium-based metal, it is possible to prevent the problem of incomplete formation of a protective layer on the lithium-based metal surface and to easily prevent the problem of degradation of the capacity and life of the battery, caused by an increase in the resistance of the electrolyte and lithium-based metal surface.

### Second Solvent

The second solvent includes at least one selected from an ether-based compound, an ester-based compound, an amide-based compound and a carbonate-based compound, and may function to provide the electrolyte with lithium-ion conductivity by dissolving a lithium salt and to allows elution of the positive electrode active material to facilitate the electrochemical reaction with lithium. Particularly, when the positive electrode active material is sulfur, the second solvent may function to allow elution of sulfur as a positive electrode active material to facilitate the electrochemical reaction with lithium.

The carbonate-based compound may include a linear carbonate-based compound, a cyclic carbonate-based compound or a mixture thereof.

Particular examples of the ether-based compound include, but are not limited to: dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, or two or more of them. Particularly, when the positive electrode active material is sulfur, use of dimethoxyethanol as the second solvent may be advantageous in that the reaction is facilitated by virtue of high solubility to polysulfide.

**In** addition, particular examples of the ester-based compound include, but are not limited to: methyl acetate, ethyl acetate, propyl acetate, methyl propionate, ethyl propionate, propyl propionate, γ-butyrolactone, γ-valerolactone, γ-caprolactone, σ-valerolactone, ε-caprolactone, or two or more of them.

The amide-based compound may be a conventional amide-based compound used currently in the art.

Particular examples of the linear carbonate-based compound include, but are not limited to: dimethyl carbonate (DMC), diethyl carbonate (DEC), dipropyl carbonate (DPC), ethyl methyl carbonate (EMC), methyl propyl carbonate (MPC), ethyl propyl carbonate (EPC), or a mixture of two or more of them.

Particular examples of the cyclic carbonate-based compound include, but are not limited to: ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, halides thereof (fluoroethylene carbonate (FEC), etc.), or two or more of them.

The second solvent may be present in an amount of 50-95 parts by volume or 70-90 parts by volume, based on 100 parts by volume of the total organic solvent (i.e. the first solvent + the second solvent) contained in the nonaqueous electrolyte according to an embodiment of the present disclosure. When the content of the second solvent satisfies the above-defined range, it is possible to dissolve the lithium salt sufficiently, and thus to easily prevent the problem of degradation of the lithium-ion conductivity. It is also possible to easily prevent the problem of deposition of the positive electrode active material resulting from exceeding the soluble concentration thereof. Particularly, when the positive electrode active material is sulfur, it is possible to easily prevent the problem of deposition of sulfur, resulting from exceeding the soluble concentration of sulfur as the positive electrode active material. It is also possible to easily prevent the problem of excessive elution of sulfur leading to a severe shuttle phenomenon of lithium polysulfide and the lithium metal negative electrode and degradation of the life of an electrochemical device.

Meanwhile, the organic solvent including the first solvent and the second solvent may be present in an amount of 60-95 wt%, preferably 60-92 wt%, and more preferably 60-90 wt%, based on 100 wt% of the total weight of the nonaqueous electrolyte according to an embodiment of the present disclosure. When the content of the organic solvent satisfies the above-defined range, it is possible to easily prevent the problem of an increase in viscosity of the electrolyte and a decrease in ion conductivity or the problem of incomplete dissolution of the lithium salt or additive in the electrolyte, and to easily prevent the problem of a decrease in ion conductivity caused by a decrease in lithium salt concentration in the electrolyte.

### Lithium Bis(nonafluorobutanesulfonyl)imide (LiNFSI) (First Lithium Salt)

Decomposition of an electrolyte becomes severe and is accelerated at high temperature, and particularly, decomposition of a salt becomes severe and is accelerated.

Lithium bis(nonafluorobutanesulfonyl)imide has a longer carbon chain as compared to generally used lithium salts, and thus is more stable and resistant against decomposition even at high temperature. Therefore, it is possible to supply a lithium salt continuously to an electrolyte even at high temperature, and thus to improve the life characteristics of an electrochemical device at high temperature.

According to an embodiment of the present disclosure, when the nonaqueous electrolyte further includes the second lithium salt as described hereinafter, it is possible to supply a lithium salt continuously to an electrolyte by lithium bis(nonafluorobutane sulfonyl)imide, even if the second lithium salt, such as lithium bis(fluorosulfonyl)imide (LiFSI), is decomposed at high temperature, and thus to improve the life characteristics of an electrochemical device at high temperature.

Lithium bis(nonafluorobutane sulfonyl)imide is present in an amount of 2-5 wt% based on 100 wt% of the total weight of the nonaqueous electrolyte. When the content of lithium bis(nonafluorobutanesulfonyl)imide satisfies the above-defined range, it is possible to improve the stability of the electrolyte by inhibiting the decomposition of the electrolyte. It is also possible to improve the life characteristics of the electrolyte at high temperature.

When lithium bis(nonafluorobutanesulfonyl)imide is present in an amount of less than 2 wt% based on 100 wt% of the total weight of the nonaqueous electrolyte, it is not possible to provide an effect of improving the stability sufficiently. When lithium bis(nonafluorobutanesulfonyl)imide is present in an amount of larger than 5 wt% based on 100 wt% of the total weight of the nonaqueous electrolyte, the resistance may be increased due to the long carbon chain. In addition, over-voltage may occur, which makes it difficult to carry out high-rate operation and cannot provide improvement of the life characteristics.

According to an embodiment of the present disclosure, the nonaqueous electrolyte may further include a second lithium salt.

The second lithium salt is an electrolyte salt used to increase the ion conductivity, and particular examples thereof include LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi (i.e. LiTFSI), (CF₃SO₂)₂NLi, (CF₃SO₂)₃CLi, lithium chloroborate, lithium C4 or lower aliphatic carboxylate, lithium tetraphenylborate, lithium imide, or two or more of them. Particularly, when (SO₂F) ₂NLi is used as the second lithium salt, there is an advantage in that a protective layer may be formed on an electrode.

According to an embodiment of the present disclosure, the second lithium salt may include LiFSI.

The concentration of the second lithium salt may be determined considering the ion conductivity, or the like. For example, the second lithium salt concentration may be 0.2-2 M, or 0.5-1 M. When the second lithium salt concentration satisfies the above-defined range, it is possible to easily ensure ion conductivity suitable for the operation of a battery and to prevent degradation of lithium-ion transportability caused by an increase in viscosity of the electrolyte or an increase in decomposition of the lithium salt itself.

According to an embodiment of the present disclosure, the nonaqueous electrolyte may further include lithium nitrate (LiNO₃).

When the negative electrode is a lithium-based metal, lithium nitrate reacts with the lithium-based metal to form a lithium-affinitive protective layer, such as lithium nitride (Li₃N) or lithium oxynitride (LiON), on the lithium-based metal surface to inhibit the growth of lithium dendrite and to prevent the decomposition of electrolyte ingredients, thereby providing a battery with improved life and efficiency.

In addition, when the positive electrode active material is sulfur, there is an advantage in that it is possible to inhibit a shuttle reaction between polysulfide migrating toward the negative electrode and the negative electrode.

Further, if necessary, the nonaqueous electrolyte may further include lanthanum nitrate (La(NO₃)₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂), or two or more of them, besides lithium nitrate.

Lithium nitrate may be present in an amount of 0.1-7 wt%, preferably 0.5-5 wt%, based on 100 wt% of the total weight of the nonaqueous electrolyte. When the content of lithium nitrate satisfies the above-defined range, it is possible to easily prevent the problem of a rapid decrease in coulombic efficiency and to prevent an increase in viscosity of the electrolyte.

The nonaqueous electrolyte according to an embodiment of the present disclosure may include 2-methylfuran as the first solvent, dimethoxyethane as the second solvent, (SOF)₂NLi, lithium nitrate and lithium bis(nonafluorobutanesulfonyl)imide. Particularly, when the positive electrode active material is sulfur, the nonaqueous electrolyte including the above-mentioned ingredients facilitates proper dissolution of polysulfide to such a degree that the reaction may be carried out smoothly and no significant resistance may occur.

Since the nonaqueous electrolyte according to an embodiment of the present disclosure includes lithium bis(nonafluorobutanesulfonyl)imide in an amount of 2-5 wt% based on 100 wt% of the total weight of the nonaqueous electrolyte, it can be inhibited from decomposition at high temperature, particularly, a high temperature of 45°C or higher, and can provide improved stability and high-temperature life characteristics. As a result, it is possible to improve the high-temperature life characteristics of an electrochemical device including the nonaqueous electrolyte.

Hereinafter, the electrochemical device according to an embodiment of the present disclosure will be explained.

The electrochemical device according to an embodiment of the present disclosure includes: a positive electrode; a negative electrode; a separator interposed between the positive electrode and the negative electrode; and the nonaqueous electrolyte. Reference will be made to the above description about the nonaqueous electrolyte.

According to the present disclosure, the electrochemical device includes any device which carries out electrochemical reaction, and particular examples thereof include all types of primary batteries, secondary batteries, fuel cells, solar cells or capacitors, such as super capacitor devices.

According to an embodiment of the present disclosure, the electrochemical device may be any lithium secondary battery used conventionally in the art, and particularly, may be a lithium-sulfur battery. When the electrochemical device is a lithium-sulfur battery, the nonaqueous electrolyte according to an embodiment of the present disclosure may provide an adequate level of solubility of polysulfide advantageously.

The positive electrode includes a positive electrode active material, a binder, a conductive material, or the like. The positive electrode active material may include one used conventionally in an electrochemical device, and particular examples thereof include lithium nickel cobalt manganese compounds (lithium NCM-based compounds), elemental sulfur (S₈), sulfur-based compounds or a mixture thereof. Particularly, the sulfur-based compound may include Li₂Sₙ (n ≥ 1), organic sulfur compound, carbon-sulfur composite ((C₂Sₓ)ₙ, x = 2.5-50, n ≥ 2), or the like. In addition, the positive electrode active material may include a sulfur-carbon composite, and sulfur may be used in combination with a conductive material since it has no electrical conductivity in itself. The carbonaceous material (or carbon source) forming the sulfur-carbon composite may be any material used conventionally in the art and having a porous structure or a high specific surface area. Particular examples of the porous carbonaceous material may include, but are not limited to: graphite; graphene; carbon black, such as denka black, acetylene black, ketjen black, channel black, furnace black, lamp black or thermal black; carbon nanotubes, such as single-walled carbon nanotubes (SWCNTs) or multi-walled carbon nanotubes (MWCNTs); carbon fibers, such as graphite nanofibers (GNFs), carbon nanofibers (CNFs) or activated carbon fibers (ACF); activated carbon; or two or more of them. In addition, the porous carbonaceous material is not particularly limited in its shape and may have a spherical, rod-like, needle-like, sheet-like, tubular or bulky shape, as long as it can be applied to an electrochemical device.

In addition, the carbonaceous material has pores, and may show a porosity of 40-90vol% or 60-80vol%. When the porosity of the carbonaceous material satisfies the above-defined range, lithium ions may be transported sufficiently with ease, and the problem of degradation of the mechanical strength may be prevented with ease. The carbonaceous material may have a pore size of 10 nm to 5 µm, or 50 nm to 5 µm. When the pore size of the carbonaceous material satisfies the above-defined range, lithium-ion permeation may be accomplished with ease, and the problem of a battery short-circuit caused by the contact between the electrodes and safety-related problem may be prevented with ease.

The binder is an ingredient which assists the binding of the positive electrode active material with the conductive material, or the like, and the binding to a current collector. Particular examples of the binder include but are not limited to: polyvinylidene fluoride (PVDF), polyvinylidene fluoride-co-hexafluoropropylene (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinyl pyridine, polyvinyl pyrrolidone, styrene-butadiene rubber, acrylonitrile-butadiene rubber, ethylenepropylene-diene monomer rubber (EPDM rubber), sulfonated EPDM, styrene-butylene rubber, fluoro-rubber, carboxymethyl cellulose (CMC), starch, hydroxypropyl cellulose, regenerated cellulose, or two or more of them.

The binder may be used generally in an amount of 1-50 parts by weight or 3-15 parts by weight, based on 100 parts by weight of the total weight of the positive electrode. When the content of the binder satisfies the above-defined range, it is possible to ensure the battery capacity with ease, while ensuring the adhesion of the positive electrode active material with the current collector.

The conductive material contained in the positive electrode is not particularly limited, as long as it has high electrical conductivity while not causing any side reaction under the internal environment of the electrochemical device and any chemical change in the corresponding battery, and graphite or conductive carbon may be used typically. Particular examples of the conductive material include, but are not limited to: graphite, such as natural graphite or artificial graphite; carbon black, such as acetylene black, ketjen black, denka black, thermal black, channel black, furnace black, lamp black or thermal black; carbonaceous materials having a crystal structure of graphene or graphite; conductive fibers, such as carbon fibers or metal fibers; fluorocarbon; metal powder, such as aluminum powder or nickel powder; conductive whisker, such as zinc oxide or potassium titanate; conductive metal oxide, such as titanium oxide; and conductive polymers, such as polyphenylene derivatives; or two or more of them.

The conductive material may be added generally in an amount of 0.5-50 parts by weight or 1-30 parts by weight, based on 100 parts by weight of the total weight of the positive electrode. When the content of the conductive material satisfies the above-defined range, it is possible to improve the electrical conductivity with ease, to prevent degradation of the electrochemical characteristics with ease, and to ensure the capacity and energy density of the positive electrode with ease.

The method for incorporating the conductive material to the positive electrode is not particularly limited, and any method, including coating on the positive electrode active material, known to those skilled in the art may be used. In addition, if necessary, a second conductive coating layer may be added to the positive electrode active material to substitute for such addition of the conductive material.

In addition, a filler may be optionally added to the positive electrode according to the present disclosure, as an ingredient capable of inhibiting the positive electrode from swelling. Such a filler is not particularly limited, as long as it can inhibit the swelling of an electrode while not causing any chemical change in the corresponding battery. Particular examples of the filler include: olefin-based polymers, such as polyethylene and polypropylene; fibrous materials, such as glass fibers and carbon fibers; or the like.

The positive electrode may be obtained by dispersing a positive electrode active material, a binder, a conductive material, or the like, to a dispersion medium (solvent), carrying out mixing to form a slurry, applying the slurry onto a positive electrode current collector, and carrying out drying and pressing. The dispersion medium may include N-methyl-2-pyrrolidone (NMP), dimethyl formamide (DMF), dimethyl sulfoxide (DMSO), ethanol, isopropanol, water and a mixture thereof, but is not limited thereto.

The positive electrode current collector may include platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), indium doped tin oxide (ITO; In doped SnO₂), fluorine doped tin oxide (FTO: F doped SnO₂) and alloys thereof, and aluminum (Al) or stainless steel surface-treated with carbon (C), nickel (Ni), titanium (Ti) or silver (Ag), or the like, but is not limited thereto. The positive electrode current collector may have various shapes, such as a film, a foil, a sheet, a punched material, a porous body, a foam, or the like.

The negative electrode includes a negative electrode active material, a binder, a conductive material, or the like. The negative electrode active material may include any conventional negative electrode active material used for the negative electrode of an electrochemical device according to the related art. Particular examples of the negative electrode active material include lithium-intercalating materials, such as lithium metal or lithium alloy, carbon, petroleum coke, activated carbon, graphite or other carbonaceous materials.

The binder is an ingredient which assists the binding of the negative electrode active material with the conductive material, or the like, and the binding to a current collector. Particular examples of the binder include but are not limited to: polyvinylidene fluoride (PVDF), polyvinylidene fluoride-co-hexafluoropropylene (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinyl pyridine, polyvinyl pyrrolidone, styrene-butadiene rubber, acrylonitrile-butadiene rubber, ethylenepropylene-diene monomer rubber (EPDM rubber), sulfonated EPDM, styrene-butylene rubber, fluoro-rubber, carboxymethyl cellulose (CMC), starch, hydroxypropyl cellulose, regenerated cellulose, or two or more of them.

The binder may be used generally in an amount of 1-50 parts by weight or 3-15 parts by weight, based on 100 parts by weight of the total weight of the negative electrode. When the content of the binder satisfies the above-defined range, it is possible to ensure the battery capacity with ease, while ensuring the adhesion of the negative electrode active material with the current collector.

The conductive material contained in the negative electrode is not particularly limited, as long as it has high electrical conductivity while not causing any side reaction under the internal environment of the electrochemical device and any chemical change in the corresponding battery, and graphite or conductive carbon may be used typically. Particular examples of the conductive material include, but are not limited to: graphite, such as natural graphite or artificial graphite; carbon black, such as acetylene black, ketjen black, denka black, thermal black, channel black, furnace black, lamp black or thermal black; carbonaceous materials having a crystal structure of graphene or graphite; conductive fibers, such as carbon fibers or metal fibers; fluorocarbon; metal powder, such as aluminum powder or nickel powder; conductive whisker, such as zinc oxide or potassium titanate; conductive metal oxide, such as titanium oxide; and conductive polymers, such as polyphenylene derivatives; or two or more of them.

The conductive material may be added generally in an amount of 0.5-50 parts by weight or 1-30 parts by weight, based on 100 parts by weight of the total weight of the negative electrode. When the content of the conductive material satisfies the above-defined range, it is possible to improve the electrical conductivity with ease, to prevent degradation of the electrochemical characteristics with ease, and to ensure the capacity and energy density of the negative electrode with ease.

The method for incorporating the conductive material to the negative electrode is not particularly limited, and any method, including coating on the negative electrode active material, known to those skilled in the art may be used. In addition, if necessary, a second conductive coating layer may be added to the negative electrode active material to substitute for such addition of the conductive material.

In addition, a filler may be optionally added to the negative electrode according to the present disclosure, as an ingredient capable of inhibiting the negative electrode from swelling. Such a filler is not particularly limited, as long as it can inhibit the swelling of an electrode while not causing any chemical change in the corresponding battery. Particular examples of the filler include: olefin-based polymers, such as polyethylene and polypropylene; fibrous materials, such as glass fibers and carbon fibers; or the like.

The negative electrode may be obtained by dispersing a negative electrode active material, a binder, a conductive material, or the like, to a dispersion medium (solvent), carrying out mixing to form a slurry, applying the slurry onto a negative electrode current collector, and carrying out drying and pressing. The dispersion medium may include N-methyl-2-pyrrolidone (NMP), dimethyl formamide (DMF), dimethyl sulfoxide (DMSO), ethanol, isopropanol, water and a mixture thereof, but is not limited thereto.

The negative electrode current collector is not particularly limited, as long as it has high conductivity, while not causing any chemical change in the corresponding battery, and may be selected from the group consisting of copper, aluminum, stainless steel, zinc, titanium, silver, palladium, nickel, iron, chromium, alloys thereof and combinations thereof. Herein, stainless steel may be surface-treated with carbon, nickel, titanium or silver, and the alloy may include aluminum-cadmium alloy. Besides the above-listed current collectors, baked carbon, a non-conductive polymer surface-treated with a conductive material, conductive polymer, or the like, may also be used. In general, copper foil may be used as a negative electrode current collector.

In addition, the negative electrode current collector may have various shapes, such as a film optionally having fine surface irregularities, a sheet, a foil, a net, a porous body, a foam, a nonwoven web, or the like. Further, the negative electrode current collector may have a thickness of 3-500 µm. When the thickness of the negative electrode current collector satisfies the above-defined range, it is possible to ensure the processability with ease even when the cell is assembled by a folding process, while ensuring a current collection effect.

The lithium-based metal may be lithium or a lithium alloy. Herein, the lithium alloy includes an element capable of forming an alloy with lithium. Particular examples of the alloy include alloys of lithium with at least one element selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

Herein, lithium metal may have a sheet- or foil-like shape. Optionally, lithium metal may be provided in the form of a current collector on which lithium or a lithium alloy is deposited or coated through a dry process, or particle-shaped metal or alloy is deposited or coated through a wet process, or the like.

In general, a separator may be interposed between the positive electrode and the negative electrode. The separator is a physical separator functioning to separate both electrodes physically from each other, and any conventional separator may be used with no particular limitation. Particularly, the separator preferably shows low resistance against the electrolyte ion migration and high wettability with an electrolyte. In addition, the separator allows lithium-ion transport between the positive electrode and the negative electrode, while separating or insulating both electrodes from each other. Such a separator may include a porous and non-conductive or insulating material. The separator may be an independent member, such as a film, or a coating layer added to the positive electrode and/or negative electrode.

Particular examples of the polyolefin-based porous membrane that may be used as the separator include membranes formed of polyolefin polymers including polyethylene, such as high-density polyethylene, linear low-density polyethylene, low-density polyethylene and ultrahigh-molecular weight polyethylene, polypropylene, polybutylene and polypentene, alone or in combination. Particular examples of the nonwoven web that may be used as the separator include nonwoven webs formed of polyphenylene oxide, polyimide, polyamide, polycarbonate, polyethylene terephthalate, polyethylene naphthalate, polybutylene terephthalate, polyphenylene sulfide, polyacetal, polyethersulfone, polyetheretherketone, polyester, or the like, alone or in combination. Such a nonwoven web may include fibers forming a porous web, and particular examples of the fibers include spunbond or meltblown type long fibers.

The thickness of the separator is not particularly limited, but may be 1-100 µm or 5-50 µm. When the thickness of the separator satisfies the above-defined range, it is possible to prevent the problem of degradation of the battery performance caused by the separator functioning as a resistance layer, while maintaining the mechanical properties. The pore size and porosity of the separator are not particularly limited, but may be 0.1-50 µm and 10-95vol%, respectively. When the pore size of the separator satisfies the above-defined range, it is possible to prevent the separator from functioning as a resistance layer and to maintain the mechanical properties of the separator with ease.

The electrochemical device including the positive electrode, the negative electrode, separator and the electrolyte according to an embodiment of the present disclosure may be obtained by a process including allowing the positive electrode and the negative electrode to face each other, interposing the separator therebetween, and injecting the nonaqueous electrolyte according to an embodiment of the present disclosure thereto.

Meanwhile, the lithium secondary battery according to an embodiment of the present disclosure may be used applied to a battery cell used as a power source of a small-scale device but also may be used suitably as a unit cell of a battery module which is a power source of a middle- to large-scale device. In this context, the present disclosure also provides a battery module including two or more electrochemical devices connected electrically (in series or in parallel). The number of electrochemical devices contained in the battery module may be controlled diversely considering the use and capacity of the battery module, or the like. Further, the present disclosure provides a battery pack including the battery modules connected electrically according to the general technology known to those skilled in the art. The battery module and battery pack may be used as a power source of at least one middle- to large-scale device selected from: power tools; electric cars, including electric vehicles (EVs), hybrid electric vehicles (HEVs), plug-in hybrid electric vehicles (PHEVs), or the like; electric trucks; electric commercial vehicles; electric power storage systems; or the like, but is not limited thereto.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

### Preparation of Nonaqueous Electrolyte

First, 2-methylfuran (first solvent) and dimethoxyethane (second solvent) were mixed at a volume ratio (v/v) of 20:80 to prepare an organic solvent. Then, a nonaqueous electrolyte was prepared by introducing 5 wt% of lithium nitrate and 2 wt% of lithium bis(nonafluorobutanesulfonyl)imide (LiNFSI) to the organic solvent based on the total weight of electrolyte and dissolving (SO₂F)₂NLi (LiFSI) therein to a concentration of 0.75 M.

### Manufacture of Electrochemical Device

First, a sulfur-carbon (carbon nanotubes, CNT) composite (S/C 75:25 weight ratio) as a positive electrode active material was mixed with styrene butadiene rubber/carboxymethyl cellulose (SBR/CMC, 7:3) as a binder at a weight ratio of 95:5 to prepare a positive electrode slurry composition, and the slurry composition was applied to a current collector (Al foil) and dried, followed by pressing with a roll press machine, to obtain a positive electrode (wherein the positive electrode had a loading amount of 4.5 mg/cm² and a porosity of 68 vol%).

Then, the resultant positive electrode was allowed to face a negative electrode including lithium pressed on one surface of a copper current collector to a thickness of 45 µm, a porous polyethylene (PE) separator was interposed between both electrodes, and the nonaqueous electrolyte prepared as described above was injected thereto, followed by sealing, to obtain a coin cell-type lithium-sulfur battery.

### Example 2

A nonaqueous electrolyte and an electrochemical device were obtained in the same manner as Example 1, except that 3 wt% of lithium bis(nonafluorobutanesulfonyl)imide was added instead of 2 wt% of lithium bis(nonafluorobutanesulfonyl)imide.

### Example 3

A nonaqueous electrolyte and an electrochemical device were obtained in the same manner as Example 1, except that 5 wt% of lithium bis(nonafluorobutanesulfonyl)imide was added instead of 2 wt% of lithium bis(nonafluorobutanesulfonyl)imide.

### Comparative Example 1

A nonaqueous electrolyte and an electrochemical device were obtained in the same manner as Example 1, except that no lithium bis(nonafluorobutanesulfonyl)imide was added.

### Comparative Example 2

A nonaqueous electrolyte and an electrochemical device were obtained in the same manner as Example 1, except that 1 wt% of lithium bis(nonafluorobutanesulfonyl)imide was added instead of 2 wt% of lithium bis(nonafluorobutanesulfonyl)imide.

### Comparative Example 3

A nonaqueous electrolyte and an electrochemical device were obtained in the same manner as Example 1, except that 7 wt% of lithium bis(nonafluorobutanesulfonyl)imide was added instead of 2 wt% of lithium bis(nonafluorobutanesulfonyl)imide.

### Comparative Example 4

A nonaqueous electrolyte and an electrochemical device were obtained in the same manner as Example 1, except that 3 wt% of lithium tetrafluoroborate (LiBF₄) was added instead of 2 wt% of lithium bis(nonafluorobutanesulfonyl)imide.

### Test Example: Evaluation of Life Characteristics

The electrochemical device according to each of Examples 1-3 and Comparative Examples 1-4 was discharged firstly at 0.1 C in a constant current (CC) mode at 45°C and then subjected to two charge/discharge cycles at 0.1 C. After that, the electrochemical device was subjected to three charge/discharge cycles at 0.2 C to perform stabilization, and then to 0.3 C/0.5 C high-rate charge/discharge to evaluate the life characteristics of the electrochemical device. The results are shown in Table 1 and FIG. 1. Herein, the discharge cut-off voltage was set to 1.8 V, and the charge cut-off voltage was set to 2.5 V. Then, the cycle number where the electrochemical device shows a capacity retention of 80% based on the first high-rate discharge capacity at 0.5 C was determined.

**[Table 1]**

| | Cycle number corresponding to capacity retention of 80% |
|---|---|
| Ex. 1 | 49 |
| Ex. 2 | 64 |
| Ex. 3 | 66 |
| Comp. Ex. 1 | 23 |
| Comp. Ex. 2 | 28 |
| Comp. Ex. 3 | 28 |

As can be seen from Table 1 and FIG. 1, the electrochemical device including the nonaqueous electrolyte containing 2-5 wt% of lithium bis(nonafluorobutanesulfonyl)imide based on 100 wt% of the total weight of the nonaqueous electrolyte according to each of Examples 1-3 shows significantly improved life characteristics, as compared to Comparative Examples 1 and 2 containing no lithium bis(nonafluorobutanesulfonyl)imide or containing less than 2 wt% of lithium bis(nonafluorobutanesulfonyl)imide based on 100 wt% of the total weight of the nonaqueous electrolyte.

In addition, Comparative Example 3 containing lithium bis(nonafluorobutane sulfonyl)imide in an amount of larger than 5 wt% based on 100 wt% of the total weight of the nonaqueous electrolyte cannot provide an effect of improving the life characteristics due to an increase in resistance.

Further, even when two types of lithium salts, including LiFSI and another type of lithium salt, are used, the combination of LIBF₄ and LiFSI, instead of lithium bis(nonafluorobutanesulfonyl)imide, cannot provide the effect demonstrated according to the present disclosure.

## Claims

1. A nonaqueous electrolyte, comprising:
a first solvent comprising a heterocyclic compound having at least one double bond or not, and containing at least one of oxygen and sulfur atoms;
a second solvent comprising at least one of an ether-based compound, an ester-based compound, an amide-based compound and a carbonate-based compound; and
a first lithium salt,
wherein the first lithium salt comprises lithium bis(nonafluorobutanesulfonyl)imide, and the lithium bis(nonafluorobutanesulfonyl)imide is present in an amount of 2-5 wt% based on 100 wt% of the total weight of the nonaqueous electrolyte.

2. The nonaqueous electrolyte according to claim 1, which further comprises a second lithium salt, and the second lithium salt comprises LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₂NLi, (CF₃SO₂)₃CLi, lithium chloroborate, lithium C4 or lower aliphatic carboxylate, lithium tetraphenylborate, lithium imide, or two or more of them.

3. The nonaqueous electrolyte according to claim 2, wherein the second lithium salt comprises (SO₂F)₂NLi.

4. The nonaqueous electrolyte according to claim 2, wherein the second lithium salt has a concentration of 0.2-2.0 M.

5. The nonaqueous electrolyte according to claim 1, wherein the heterocyclic compound is a 3- to 15-membered heterocyclic compound non-substituted or substituted with at least one selected from the group consisting of a C1-C4 alkyl group, a C3-C8 cyclic alkyl group, a C6-C10 aryl group, a halogen group, a nitro group, an amine group and a sulfonyl group, or a polycyclic compound of at least one of a C3-C8 cyclic alkyl group and a C6-C10 aryl group with a heterocyclic compound.

6. The nonaqueous electrolyte according to claim 1, wherein the heterocyclic compound comprises 1,3-dioxolane, 4,5-diethyl-1,3-dioxolane, 4,5-dimethyl-1,3-dioxolane, 4-methyl-1,3-dioxolane, 4-ethyl-1,3-dioxolane, 1,3-dioxane, 1,4-dioxane, 4-methyl-1,3-dioxane and 2-methyl-1,3-dioxane, furan, 2-methylfuran, 3-methylfuran, 2-ethylfuran, 2-propylfuran, 2-butylfuran, 2,3-dimethylfuran, 2,4-dimethylfuran, 2,5-dimetylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, or two or more of them.

7. The nonaqueous electrolyte according to claim 1, wherein the ether-based compound of the second solvent comprises dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, or two or more of them.

8. The nonaqueous electrolyte according to claim 1, which further comprises lithium nitrate.

9. The nonaqueous electrolyte according to claim 8, which further comprises lanthanum nitrate, potassium nitrate, cesium nitrate, magnesium nitrate, barium nitrate, lithium nitrite, potassium nitrite, cesium nitrite, or two or more of them.

10. The nonaqueous electrolyte according to claim 1, which comprises 2-methylfuran as the first solvent, dimethoxyethane as the second solvent, (SO₂F)₂NLi, lithium nitrate and lithium bis(nonafluorobutanesulfonyl)imide.

11. An electrochemical device comprising: a positive electrode; a negative electrode; a separator interposed between the positive electrode and the negative electrode; and the nonaqueous electrolyte as defined in any one of claims 1 to 10.

12. The electrochemical device according to claim 11, which is a lithium-sulfur battery.

## Patentansprüche

1. Nichtwässriger Elektrolyt, umfassend:
ein erstes Lösungsmittel, umfassend eine heterocyclische Verbindung, die mindestens eine Doppelbindung aufweist oder nicht, und die mindestens eines von Sauerstoff- und Schwefelatomen enthält;
ein zweites Lösungsmittel, umfassend mindestens eines von einer Verbindung auf Etherbasis, einer Verbindung auf Esterbasis, einer Verbindung auf Amidbasis und einer Verbindung auf Carbonatbasis; und
ein erstes Lithiumsalz,
wobei das erste Lithiumsalz Lithiumbis(nonafluorbutansulfonyl)imid umfasst und das Lithiumbis(nonafluorbutansulfonyl)imid in einer Menge von 2-5 Gew.-%, bezogen auf 100 Gew.-% des Gesamtgewichts des nichtwässrigen Elektrolyten, vorliegt.

2. Nichtwässriger Elektrolyt nach Anspruch 1, der ferner ein zweites Lithiumsalz umfasst und das zweite Lithiumsalz LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH3SO₃Li, CF3SO₃Li, (C₂F₅SO₂)₂NLi, (SO₂F)₂NLi, (CF₃SO₂)₂NLi, (CF₃SO₂)₃CLi, Lithiumchlorborat, Lithium-C4- oder niederes aliphatisches Carboxylat, Lithiumtetraphenylborat, Lithiumimid oder zwei oder mehr davon umfasst.

3. Nichtwässriger Elektrolyt nach Anspruch 2, wobei das zweite Lithiumsalz (SO₂F)₂NLi umfasst.

4. Nichtwässriger Elektrolyt nach Anspruch 2, wobei das zweite Lithiumsalz eine Konzentration von 0,2-2,0 M aufweist.

5. Nichtwässriger Elektrolyt nach Anspruch 1, wobei die heterocyclische Verbindung eine 3- bis 15-gliedrige heterocyclische Verbindung ist, die unsubstituiert oder substituiert ist mit mindestens einem, ausgewählt aus der Gruppe, bestehend aus einer C1-C4-Alkylgruppe, einer cyclischen C3-C8-Alkylgruppe, einer C6-C10-Arylgruppe, einer Halogengruppe, einer Nitrogruppe, einer Amingruppe und einer Sulfonylgruppe, oder einer polycyclischen Verbindung von mindestens einem von einer cyclischen C3-C8-Alkylgruppe und einer C6-C10-Arylgruppe mit einer heterocyclischen Verbindung.

6. Nichtwässriger Elektrolyt nach Anspruch 1, wobei die heterocyclische Verbindung 1,3-Dioxolan, 4,5-Diethyl-1,3-dioxolan, 4,5-Dimethyl-1,3-dioxolan, 4-Methyl-1,3-dioxolan, 4-Ethyl-1,3-dioxolan, 1,3-Dioxan, 1,4-Dioxan, 4-Methyl-1,3-dioxan und 2-Methyl-1,3-dioxan, Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran, 2-(2-Nitrovinyl)furan, Thiophen, 2-Methylthiophen, 2-Ethylthiophen, 2-Propylthiophen, 2-Butylthiophen, 2,3-Dimethylthiophen, 2,4-Dimethylthiophen, 2,5-Dimethylthiophen oder zwei oder mehr davon umfasst.

7. Nichtwässriger Elektrolyt nach Anspruch 1, wobei die Verbindung auf Etherbasis des zweiten Lösungsmittels Dimethylether, Diethylether, Dipropylether, Methylethylether, Methylpropylether, Ethylpropylether, Dimethoxyethan, Diethoxyethan, Methoxyethoxyethan, Diethylenglykoldimethylether, Diethylenglykoldiethylether, Diethylenglykolmethylethylether, Triethylenglykoldimethylether, Triethylenglykoldiethylether, Triethylenglykolmethylethylether, Tetraethylenglykoldimethylether, Tetraethylenglykoldiethylether, Tetraethylenglykolmethylethylether, Polyethylenglykoldimethylether, Polyethylenglykoldiethylether, Polyethylenglykolmethylethylether oder zwei oder mehr davon umfasst.

8. Nichtwässriger Elektrolyt nach Anspruch 1, der ferner Lithiumnitrat umfasst.

9. Nichtwässriger Elektrolyt nach Anspruch 8, der ferner Lanthannitrat, Kaliumnitrat, Cäsiumnitrat, Magnesiumnitrat, Bariumnitrat, Lithiumnitrit, Kaliumnitrit, Cäsiumnitrit oder zwei oder mehr davon umfasst.

10. Nichtwässriger Elektrolyt nach Anspruch 1, der 2-Methylfuran als das erste Lösungsmittel, Dimethoxyethan als das zweite Lösungsmittel, (SO₂F)₂NLi, Lithiumnitrat und Lithiumbis(nonafluorbutansulfonyl)imid umfasst.

11. Elektrochemische Vorrichtung, umfassend: eine positive Elektrode; eine negative Elektrode; einen Separator, der zwischen der positiven Elektrode und der negativen Elektrode angeordnet ist; und den nichtwässrigen Elektrolyt nach einem der Ansprüche 1 bis 10.

12. Elektrochemische Vorrichtung nach Anspruch 11, die eine Lithium-Schwefel-Batterie ist.

## Revendications

1. Électrolyte non aqueux, comprenant :
un premier solvant comprenant un composé hétérocyclique ayant une ou plusieurs liaisons doubles ou non, et contenant soit un atome d'oxygène, soit un atome de soufre ;
un deuxième solvant comprenant un ou plusieurs composés parmi un composé à base d'éther, un composé à base d'ester, un composé à base d'amide et un composé à base de carbonate ; et
un premier sel de lithium,
dans lequel le premier sel de lithium comprend un bis(nonafluorobutanesulfonyl)imide de lithium, et le bis(nonafluorobutanesulfonyl)imide de lithium est présent dans une quantité de 2-5 % en poids sur la base de 100 % en poids du poids total de l'électrolyte non aqueux.

2. Électrolyte non aqueux selon la revendication 1, lequel comprend en outre un deuxième sel de lithium, et le deuxième sel de lithium comprend LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₂NLi, (CF₃SO₂)₃CLi, un chloroborate de lithium, un carboxylate aliphatique inférieur ou C4 de lithium, un borate de tétraphényle de lithium, un imide de lithium, ou deux ou plus de ces derniers.

3. Électrolyte non aqueux selon la revendication 2, dans lequel le deuxième sel de lithium comprend (SO₂F)₂NLi.

4. Électrolyte non aqueux selon la revendication 2, dans lequel le deuxième sel de lithium a une concentration de 0,2-2,0 M.

5. Électrolyte non aqueux selon la revendication 1, dans lequel le composé hétérocyclique à 3 à 15 chaînons non substitué ou substitué par un ou plusieurs éléments sélectionnés dans le groupe constitué d'un groupe alkyle en C1-C4, un groupe alkyle cyclique en C3-C8, un groupe aryle en C6-C10, un groupe halogène, un groupe nitro, un groupe amine et un groupe sulfonyle ou d'un composé polycyclique de soit un groupe alkyle cyclique en C3-C8, soit un groupe aryle en C6-C10 avec un composé hétérocyclique.

6. Électrolyte non aqueux selon la revendication 1, dans lequel le composé hétérocyclique comprend 1,3-dioxolane, 4,5-diéthyl-1,3-dioxolane, 4,5-diméthyl-1,3-dioxolane, 4-méthyl-1,3-dioxolane, 4-éthyl-1,3-dioxolane, 1,3-dioxane, 1,4-dioxane, 4-méthyl-1,3-dioxane et 2-méthyl-1,3-dioxane, furane, 2-méthylfurane, 3-méthylfurane, 2-éthylfurane, 2-propylfurane, 2-butylfurane, 2,3-diméthylfurane, 2,4-diméthylfurane, 2,5-dimetylfurane, pyrane, 2-méthylpyrane, 3-méthylpyrane, 4-méthylpyrane, benzofurane, 2-(2-nitrovinyl)furane, thiophène, 2-méthylthiophène, 2-éthylthiophène, 2-propylthiophène, 2-butylthiophène, 2,3-diméthylthiophène, 2,4-diméthylthiophène, 2,5-diméthylthiophène, ou deux ou plus de ces derniers.

7. Électrolyte non aqueux selon la revendication 1, dans lequel le composé à base d'éther du deuxième solvant comprend un éther diméthylique, éther diéthylique, éther dipropylique, éther méthyléthylique, éther méthylpropylique, éther éthylpropylique, diméthoxyéthane, diéthoxyéthane, méthoxyéthoxyéthane, éther diméthylique de diéthylène glycol, éther diéthylique de diéthylène glycol, éther méthyléthylique de diéthylène glycol, éther diméthylique de triéthylène glycol, éther diéthylique de triéthylène glycol, éther méthyléthylique de triéthylène glycol, éther diméthylique de tétraéthylène glycol, éther diéthylique de tétraéthylène glycol, éther méthyléthylique de tétraéthylène glycol, éther diméthylique de polyéthylène glycol, éther diéthylique de polyéthylène glycol et éther méthyléthylique de polyéthylène glycol, ou deux ou plus de ces derniers.

8. Électrolyte non aqueux selon la revendication 1, lequel comprend en outre un nitrate de lithium.

9. Électrolyte non aqueux selon la revendication 8, lequel comprend en outre un nitrate de lanthane, nitrate de potassium, nitrate de césium, nitrate de magnésium, nitrate de baryum, nitrite de lithium, nitrite de potassium et nitrite de césium, ou deux ou plus de ces derniers.

10. Électrolyte non aqueux selon la revendication 1, lequel comprend un 2-méthylfurane qui est le premier solvant, un diméthoxyéthane qui est le deuxième solvant, (SO₂F)₂NLi, un nitrate de lithium et un bis(nonafluorobutanesulfonyl)imide de lithium.

11. Dispositif électrochimique comprenant : une électrode positive, une électrode négative, un séparateur intercalé entre l'électrode positive et l'électrode négative ; et l'électrolyte non aqueux comme défini dans l'une quelconque des revendications 1 à 10.

12. Dispositif électrochimique selon la revendication 11, lequel est une batterie au lithium-soufre.
